# EUROPEAN PATENT APPLICATION

(11) **EP 2 444 657 A1**
(43) Date of publication of application: **25.04.2012**
(21) Application number: 10188029.2
(22) Date of filing: 19.10.2010
(51) Int. Cl.: F03D 1/06

(54) **Arrangement and method to retrofit a wind turbine**

(71) Applicant: Siemens Aktiengesellschaft, 80333 München (DE)
(72) Inventor: Olsen, Søren, 8350, Hundslund (DK); Stege, Jason, 7330, Brande (DK); Stiesdal, Henrik, 5000, Odense C (DK)

(57) **Abstract**

The invention relates to an arrangement and to a method to retrofit a wind turbine.

According to the invention a wind turbine is retrofitted by at least one of its blades. The blade is prepared for a connection with the hub of the wind turbine.

An extension unit is designed and prepared to increase the surface-area of the blade. The extension unit and the blade are designed and arranged to interact with each other by an opening. Thus the opening might be arranged asides the blade and/or asides the extension unit.

The extension unit is connected with the blade by an adhesive, which is applied at east partly within the opening.

## Description

The invention relates to an arrangement and to a method to retrofit a wind turbine.

Sometimes an existing and already mounted wind turbine needs to be retrofitted for an adjustment of its capability to environmental conditions.

For example blades of the wind turbine may be dismantled from its hub and may be brought down to the ground. A set of new blades, which may be longer than the old set of blades, may be installed at the hub to improve the wind turbine capability.

The blades dismantled might be repaired or even reviewed for further use.

This kind of retrofit-work is time expensive and quite expensive.

Additionally the work needs to be done at calm weather-conditions if an offshore wind turbine is addressed.

Furthermore special designed vessels with huge cranes are needed to remove old blades and to install new ones.

It is therefore the aim of the invention to provide an improved arrangement and method, which allows the retrofit of a wind turbine in an easy, time- and cost-efficient way.

This aim is reached by the features of claim 1 and by the features of claim 8.

Preferred embodiments of the invention are object of the dependent claims.

According to the invention a wind turbine is retro-fitted by at least one of its blades. The blade is prepared for a connection with the hub of the wind turbine.

An extension unit is designed and prepared to increase the surface-area of the blade. The extension unit and the blade are designed and arranged to interact with each other by an opening - accordingly the opening might be arranged asides the blade and/or asides the extension unit.

The extension unit is connected with the blade by an adhesive, which is applied at least partly within the opening.

The invention claimed allows the retrofit of an existing and already mounted wind-turbine very easily.

The invention allows the retrofit of the blade without complicated features, at the site of the wind turbine or even asides a factory.

The invention can be applied quite cheap as the retrofit of the wind turbine can be done without the need for dismantled blades.

Preferably the extension unit is connected with the blade in a form-fitted manner, while the adhesive is used to fasten or fix them to each other.

Preferably the extension unit is designed and arranged to elongate the blade as a winglet.

Preferably the opening is a cavity, which is arranged asides the extension unit or winglet.

Preferably the extension unit contains the opening. Thus already mounted blades can be retrofitted by the extension unit.

Preferably the opening is a negative void / print of the blade-tip. Thus the void interacts in a form-fitted manner with the tip of the blade.

Preferably a contact-area, which is between the blade and the extension unit, is completely coated with the adhesive. Thus a very strong connection is achieved.

Preferably the adhesive shows a low viscosity.

Preferably the adhesive is a polyester-resin or a vinylester-resin or an epoxy-adhesive or a polyurethane-adhesive or a silicone-adhesive.

Preferably the adhesive is applied into the opening by a pressure difference or by a technical vacuum, which interacts along a contact area between the blade and the extension unit.

Preferably the extension unit is attached to a blade, which is already connected with the wind-turbine, according to these steps:
The blade is rotated around the hub until the tip-end of the blade is directed towards the ground,
The extension unit is aligned to the tip-end of the blade in a way that the opening of the extension unit is directed towards the tip-end of the blade.

The adhesive is filled into the opening. The extension unit is lifted until it is in close contact with the tip-end of the blade.

The blade is rotated together with the extension unit around the hub in a way that the resulting lifting action presses the adhesive along a contact area, which is between the tip-end of the blade and the extension unit.

The invention is shown in more detail by help of figures. The figures show preferred configurations and do not limit the scope of the invention.
FIG 1 shows a first step of the retrofitting of a wind-turbine-blade according to the invention, and
FIG 2 shows a second step of the retrofitting of a wind-turbine-blade according to the invention.

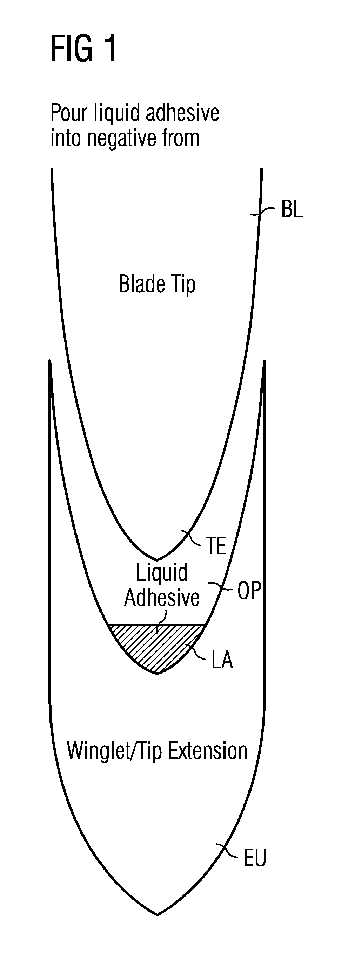

FIG 1 shows a first step of the retrofitting of a wind-turbine-blade according to the invention.

A blade BL of a wind turbine shows a tip-end TE, while the tip-end TE is prepared for a connection with an extension unit EU.

The extension unit EU is designed as a winglet and is prepared to increase the surface-area of the blade BL.

Asides the extension unit EU an opening OP is arranged. The opening OP may be shaped as a cavity, which is prepared to receive a tip part - the tip end TE - of the blade BL.

The opening OP is filled with a liquid adhesive LA.

The extension unit EU is connected with the blade BL by the adhesive LA, which is applied at east partly within the opening OP.

The opening OP is shaped and designed as a negative void / print of the tip-end TE of the blade BL.

Thus the extension unit EU is finally connected with the blade BL in a form-fitted manner.

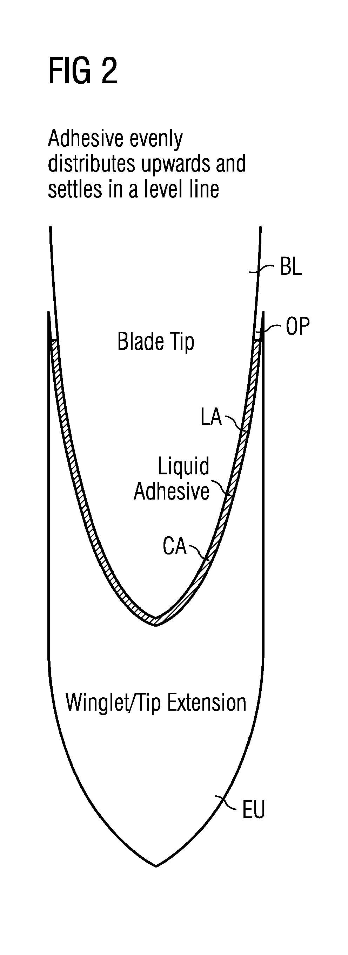

FIG 2 shows a second step of the retrofitting of a wind-turbine-blade according to the invention.

The blade BL and the extension unit EU are brought in close contact. Thus the liquid adhesive LA is distributed along a contact-area CA, which is between the blade BL and the extension unit EU.

The amount of liquid adhesive LA within the opening OP, which might be shaped as a cavity as described above. The opening OP is chosen in a way that the liquid adhesive is distributed as described above. Preferably the amount of liquid adhesive is chosen in a way that nearly no liquid adhesive leaves the opening during the retrofit-work.

## Claims

1. Arrangement to retrofit a wind turbine,
- with a blade, which is prepared to be connected with the hub of the wind turbine,
- with an extension unit, which is designed and prepared to increase the surface-area of the blade,
- where the extension unit and the blade are designed and arranged to interact with each other via an opening,
- where the extension unit is connected with the blade by an adhesive, which is applied at least partly within the opening.

2. Arrangement according to claim 1, where the extension unit and the blade are connected in a form-fitted manner and where they are fastened by the adhesive.

3. Arrangement according to claim 1 or claim 2, where the extension unit is designed and arranged to elongate the blade as a winglet.

4. Arrangement according to claim 1,
- where the extension unit contains the opening, and
- where the opening is designed and arranged as a negative void, which interacts in a form-fitted manner with a tip part of the blade.

5. Arrangement according to claim 1,
- where the opening is a cavity, which is arranged asides the extension unit,
- where the cavity is prepared to receive a tip part of the blade, and
- where the tip part of the blade and the extension unit are fastened by the adhesive.

6. Arrangement according to claim 1, where a contact-area between the blade and the extension unit is completely coated with the adhesive.

7. Arrangement according to claim 1,
- where the adhesive shows a low viscosity, and/or
- where the adhesive is a polyester-resin or a vinylester-resin or an epoxy-adhesive or a polyurethane-adhesive or a silicone-adhesive.

8. Method to retrofit a wind turbine,
- where a blade is prepared for a connection with the hub of the wind turbine,
- where the surface-area of the blade is increased by an extension unit, which is connected with the blade by an adhesive,
- where the adhesive is at least partly applied within an opening, while the opening is designed and arranged in a way, that the blade interacts with the extension unit via the opening.

9. Method according to claim 8, where the extension unit is connected with the blade in a form-fitted manner.

10. Method according to claim 8, where the extension unit elongates the blade as winglet.

11. Method according to one of the claims 8 to 10, where the opening of the extension unit, which is shaped as a negative void of the tip of the blade, receives the tip of the blade for the form-fitted connection.

12. Method according to claim 8, where the adhesive is applied into the opening by a pressure difference or by a technical vacuum, which interacts along a contact area between the blade and the extension unit.

13. Method according to claim 8, where the extension unit is attached to a blade, which is already connected with the wind-turbine, according to these steps:
- the blade is rotated around the hub until the tip-end of the blade is directed towards the ground,
- the extension unit is aligned to the tip-end of the blade in a way, that the opening of the extension unit is directed towards the tip-end of the blade,
- the adhesive is filled into the opening,
- the extension unit is lifted until, it is in close contact with the tip-end of the blade,
- the blade is rotated together with the extension unit around the hub in a way, that the resulting lifting action presses the adhesive along a contact area, which is between the tip-end of the blade and the extension unit.
